# EUROPEAN PATENT APPLICATION

(11) **EP 4 671 878 A1**
(43) Date of publication of application: **31.12.2025**
(21) Application number: 24760172.7
(22) Date of filing: 09.02.2024
(51) Int. Cl.: G05B 11/36, G06N 10/40, H02N 2/06

(54) **ACTUATOR COMPRISING QUANTUM-DRIVEN CONTROL UNIT**

(30) Priority: 24.02.2023 JP 2023027316
(71) Applicant: Canon Kabushiki Kaisha, Tokyo, 146-8501 (JP)
(72) Inventor: SUMIOKA Jun, Tokyo 146-8501 (JP)
(74) Representative: Canon Europe Limited
(86) International application number: PCT/JP2024/004498
(87) International publication number: WO 2024/176870

(57) **Abstract**

To solve the above-mentioned problem, an actuator is provided. The actuator includes a control unit having a control quantity correction unit that takes a signal based on a target state indicated by a command and a measured state as input, and corrects a control quantity for driving a first member, computed by a quantum gate operation. A second member operates in response to the first member being driven based on the corrected control quantity.

## Description

### Technical Field

The present invention relates to an actuator equipped with a quantum-driven control unit. More specifically, it relates to an actuator that operates by control based on quantum gate operations using quantum bits (qubits).

### Background Art

In recent years, quantum computing technology has been actively researched as a next-generation technology following Al (artificial intelligence) (PTL 2, 3, and 4). Quantum computing technology is a promising technology that is expected to significantly reduce computation time compared to classical computers based on conventional binary arithmetic operations. Specific areas of application currently being researched include finance, materials computation, and data mining. By utilizing the characteristics of quantum operations, quantum computing also has the potential to be applied more broadly, such as actuator control.

As an example of an actuator, a vibration-type actuator will be described. A vibration-type actuator is a non-electromagnetic motor that is configured such that an electro-mechanical energy conversion element, e.g., a piezoelectric element, bonded to an elastic body is applied with an AC voltage, thereby generating high-frequency vibrations in the element, and the vibrational energy is extracted as continuous mechanical motion.

Vibration-type actuators have excellent motor performance, including compact size, lightweight, high precision, and high torque at low speeds. At the same time, they also exhibit nonlinear motor characteristics, making them difficult to model. Their controllability change depending on the driving conditions or temperature environments, making control measures necessary to be taken. Moreover, there are many control parameters including frequency, phase difference, and voltage, making adjustment complex.

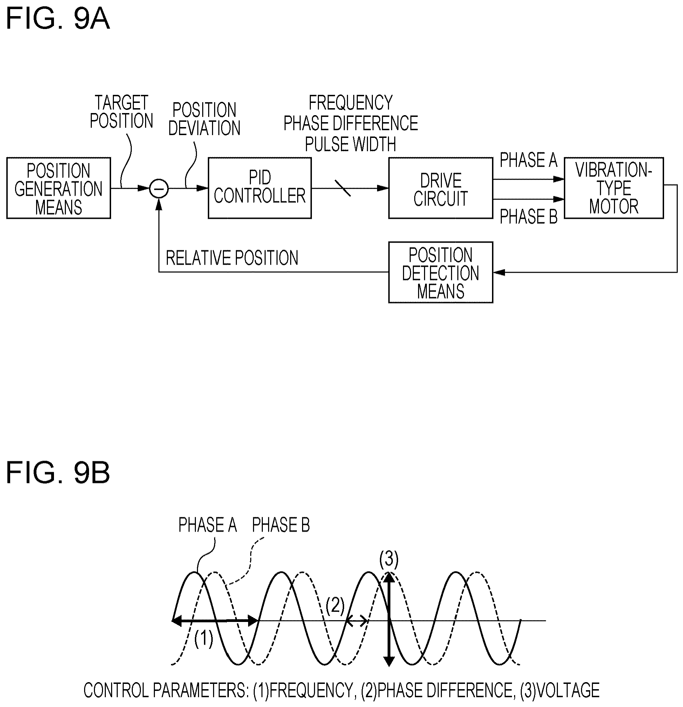

Fig. 9A illustrates an example of a vibration-type actuator controlled using conventional general PID control. A drive circuit outputs two-phase AC voltage signals, and by controlling their frequency, phase difference, and voltage amplitude (adjustable by pulse width), the speed of the vibration-type motor can be controlled (Fig. 9B). The position deviation, which is the difference between the target position and the detected relative position, is input into the PID controller. Based on the position deviation, control quantities (frequency, phase difference, and pulse width) computed by the PID algorithm are sequentially output at each control sampling, enabling position feedback control.

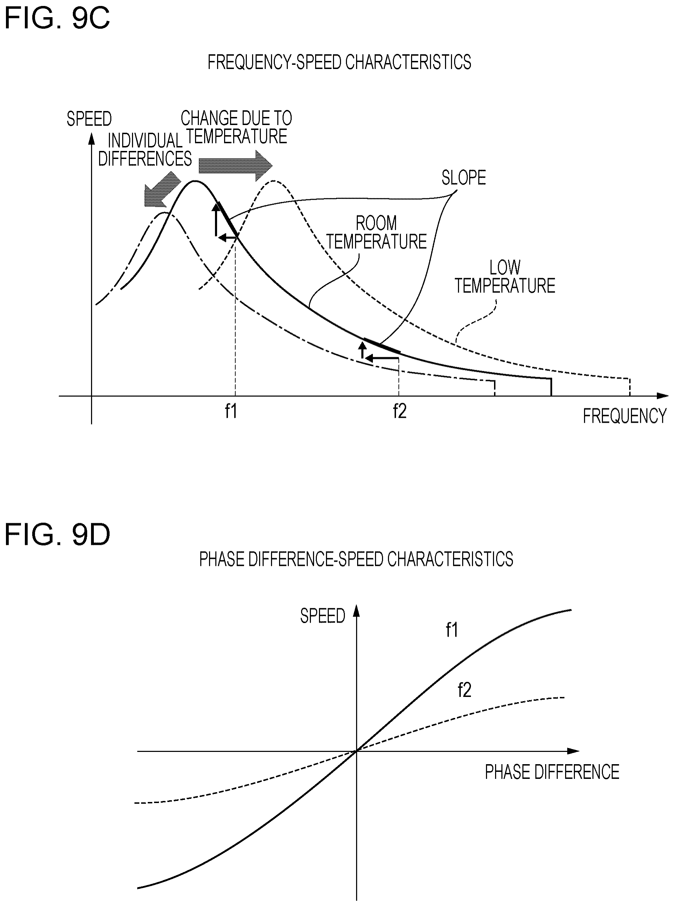

Fig. 9C is a diagram schematically illustrating the frequency-speed characteristics of a vibration-type actuator. The slope of the speed curve of the vibration-type actuator varies depending on the operating speed range, requiring adjustment of the control gain. For example, the figure indicates that the slope differs between a high-speed region at frequency f1 and a low-speed region at frequency f2. Fig. 9D is a diagram comparing the phase difference-speed characteristics between the low-speed region (f2) and the high-speed region (f1). In the high-speed region (f1), the slope is steep, indicating high control sensitivity, while in the low-speed region (f2), the slope is gentle, indicating low sensitivity. Furthermore, changes due to the environment temperature, such as a shift from room temperature to a low temperature, cause the frequency to shift toward the higher frequency side due to the temperature properties of the piezoelectric element. In that case, the speed and the slope when driven at the same frequency differ, changing control performance. Therefore, to achieve favorable controllability, optimization of the control gain is necessary, but the adjustment method is complex.

To improve the controllability of vibration-type actuators, applications of various modern control techniques, such as neural networks, have been researched. PTL 1 describes a control method for a vibration-type actuator capable of multi-degree-of-freedom driving, where a rotation axis vector that allows the actuator to reach a target position with a minimum amount of actuation is selected. A neural network is used as the inverse model of the vibration-type actuator, taking the rotation axis vector as input for the neural network and outputting the phase and amplitude for control. The parameters of the neural network are trained to approximate the characteristics of a modeled drive estimation simulator.

However, the neural network-based control described in PTL 1 requires the creation of a model based on the transfer function of the vibration-type actuator, and it is difficult to achieve a perfect match with the behavior of an actual device. Moreover, even if a perfectly matched model is obtained, controllability may be impaired due to individual differences, performance variations caused by temperature environments, and changes over time resulting from durability.

Additionally, PTL 2 regards a controlled object as part of a three-body vibration system in motion under conservative forces, designed to satisfy Grover's algorithm, and analytically derives control functions. However, the algorithm is complex and unsuitable for actuator control.

PTL 3 performs quantum searching for parameters to control a plant. PTL 4 discloses a control method for application in a superconducting resonator using pulsed electron spin resonance (ESR) using a quantum system model, where, through the operation of the resonator circuit, a spin system model is irradiated with microwave pulses. These approaches are also unsuitable for actuator control.

### Citation List

### Patent Literature

PTL 1: Japanese Patent Laid-Open No. 2004-129458
PTL 2: Japanese Patent Laid-Open No. 2016-45595
PTL 3: PCT Japanese Translation Patent Publication No. 2003-526855
PTL 4: Japanese Patent No. 6682507

### Summary of Invention

### Technical Problem

In order to improve the controllability of an actuator, the present invention provides an actuator with high precision and high robustness even under varying drive conditions and temperature environments.

### Solution to Problem

An actuator that solves the above problem is an actuator including:
a first member;
a second member that operates in response to the first member being driven;
a measurement unit that measures a state of the second member;
a command unit that issues a command; and
a control unit,
wherein the control unit
   includes a control quantity correction unit that takes a signal based on a target state indicated by the command and the measured state as input, and corrects a control quantity for driving the first member, computed by a quantum gate operation, and
   the second member operates in response to the first member being driven based on the corrected control quantity.

### Advantageous Effects of Invention

According to the present invention, by performing control based on probabilities using quantum operations, the controllability of the actuator is improved, especially when the actuator is being driven.

### Brief Description of Drawings

[Fig. 1A] Fig. 1A is a diagram illustrating an actuator equipped with a quantum-driven control unit of a present embodiment.
[Fig. 1B] Fig. 1B is a diagram illustrating the actuator with the quantum-driven control unit of the present embodiment.
[Fig. 1C] Fig. 1C is a diagram illustrating the actuator with the quantum-driven control unit of the present embodiment.
[Fig. 1D] Fig. 1D is a diagram illustrating the actuator with the quantum-driven control unit of the present embodiment.
[Fig. 2A] Fig. 2A is a diagram illustrating position feedback control of the vibration-type actuator equipped with the quantum-driven control unit of the present embodiment.
[Fig. 2B] Fig. 2B is a diagram illustrating position feedback control of the vibration-type actuator equipped with the quantum-driven control unit of the present embodiment.
[Fig. 2C] Fig. 2C is a diagram illustrating position feedback control of the vibration-type actuator equipped with the quantum-driven control unit of the present embodiment.
[Fig. 3] Fig. 3 is a diagram illustrating the details of a quantum gate operation unit and a table operation unit.
[Fig. 4A] Fig. 4A is a diagram illustrating the algorithm of a state shader operation.
[Fig. 4B] Fig. 4B is a diagram illustrating the algorithm of a state shader operation.
[Fig. 4C] Fig. 4C is a diagram illustrating the algorithm of a state shader operation.
[Fig. 5] Fig. 5 is a diagram illustrating a quantum gate operation circuit for Grover's amplification operation and the inverse QFT.
[Fig. 6A] Fig. 6A is a block diagram of the correction of the control quantities of an output table in an embodiment of the present invention.
[Fig. 6B] Fig. 6B is a block diagram of the correction of the control quantities of the output table in the embodiment of the present invention.
[Fig. 7A] Fig. 7A is a block diagram of the correction of frequency in the embodiment of the present invention.
[Fig. 7B] Fig. 7B is a conceptual diagram illustrating the correction operation in the embodiment of the present invention.
[Fig. 7C] Fig. 7C is a conceptual diagram illustrating the correction operation in the embodiment of the present invention.
[Fig. 8A] Fig. 8A illustrates the results of driving the vibration-type actuator using quantum-driven control of the present invention.
[Fig. 8B] Fig. 8B illustrates the results of driving the vibration-type actuator using quantum-driven control of the present invention.
[Fig. 9A] Fig. 9A illustrates an example of a vibration-type actuator controlled using conventional general PID control.
[Fig. 9B] Fig. 9B illustrates an example of the vibration-type actuator controlled using conventional general PID control.
[Fig. 9C] Fig. 9C illustrates an example of the vibration-type actuator controlled using conventional general PID control.
[Fig. 9D] Fig. 9D illustrates an example of the vibration-type actuator controlled using conventional general PID control.
[Fig. 10] Fig. 10 illustrates an example of use in a lens drive mechanism that performs autofocus driving of a camera.
[Fig. 11A] Fig. 11A illustrates an example of use in driving a lens and an imaging element during image stabilization.
[Fig. 11B] Fig. 11B illustrates an example of use in driving the lens and the imaging element during image stabilization.
[Fig. 12] Fig. 12 illustrates an example of use in driving an automatic stage of a microscope. Description of Embodiments

The present inventor has devised a solution that introduces the concept of probability into actuator control utilizing quantum gate operations used in quantum computing technologies.

According to the present invention, it is possible to provide a control device for an actuator with high precision and high robustness by performing probability-based control using quantum gate operations even when driving conditions or temperature environments change, thereby improving the controllability of the actuator with non-linear characteristics. Furthermore, even if the control characteristics of a quantum gate operation unit deteriorate due to load conditions or posture differences, the output of the quantum gate operation unit can be corrected toward an ideal value by sequentially adjusting the control quantities. The invention will now be described in detail with reference to the drawings.

### (First Embodiment)

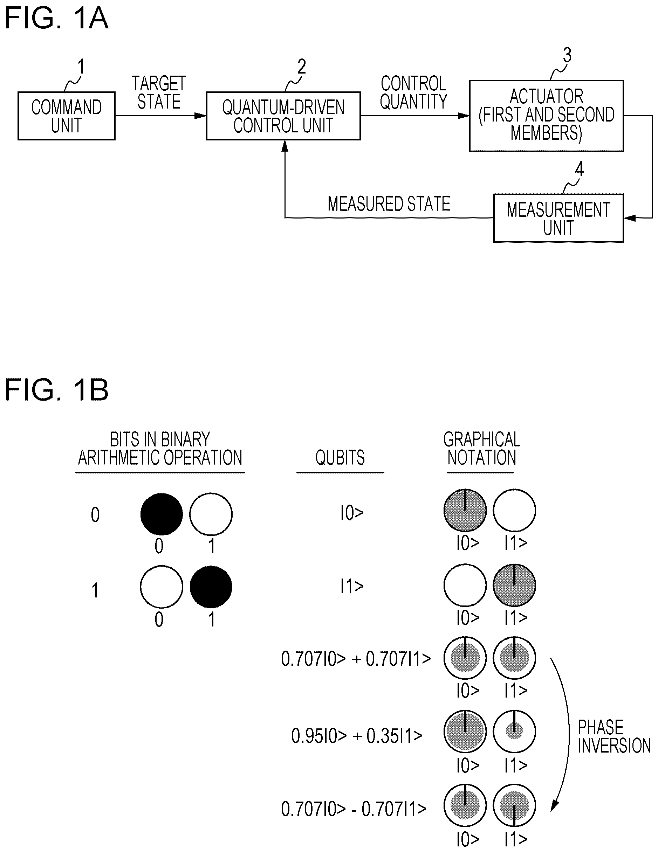

Figs. 1A to 1D illustrate an actuator equipped with a quantum-driven control unit according to the present embodiment.

In Fig. 1A, a quantum-driven control unit 2 performs quantum gate operations using qubits based on a target state indicated by a command unit 1 and a measured state measured by a measurement unit 4 as input, and outputs a control quantity to an actuator 3. The actuator 3 includes a first member driven by the control quantity, and a second member that operates in response to the first member being driven. The operation of the second member is measured by the measurement unit 4 and fed back to the quantum-driven control unit 2 as the measured state.

Fig. 1B describes qubits used in operations performed by the quantum-driven control unit 2. In conventional binary computation, bits perform operations using two states, 0 and 1, as illustrated on the left side of Fig. 1B. In contrast, as illustrated on the right side of Fig. 1B, qubits can utilize not only 0 and 1, but also a superposition state created by the H gate (Hadamard gate). This allows the amplitude and phase of the qubit's 0 and 1 states to be freely changed, thereby enabling the generation of quantum states infinitely. In the figure, the amplitude is represented by the gray area, and the phase is represented by the direction of a bar that can rotate 360 degrees from the center of the circle. The notation of a qubit is expressed by the amplitude and the sign of the phase of each quantum state, 0 and 1. For example, 0.707 indicates that the area is 70.7%, and the minus sign indicates that the phase is inverted by 180 degrees. Additionally, the square of the amplitude indicates the probability of a qubit in a quantum state being read out. In the case of an amplitude of 0.707, the probability is 50%.

The quantum-driven control unit 2, which is a control unit, outputs a control quantity associated with the probability of the qubit being read out based on the target state.

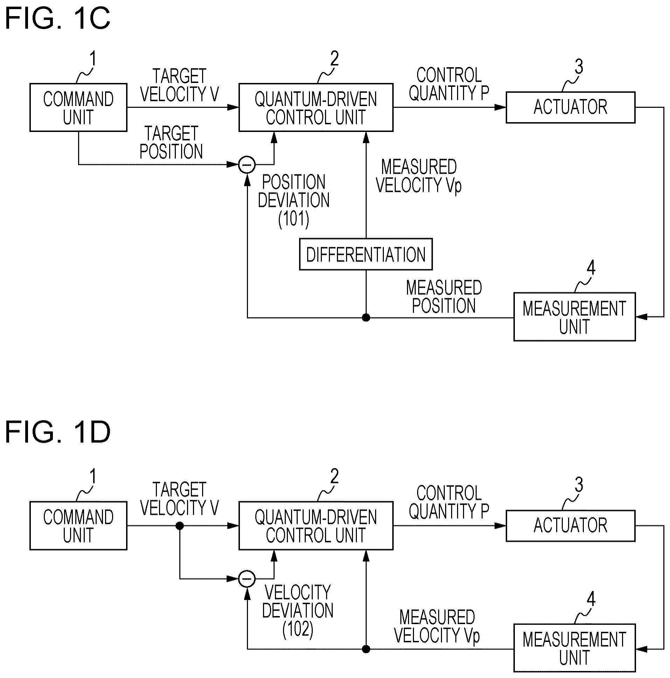

Fig. 1C illustrates an example of a configuration for performing position feedback control. The quantum-driven control unit 2 performs quantum gate operations using a target velocity V indicated by the command unit 1 and a position deviation 101 between a measured position measured by the measurement unit 4 and a target position, and outputs a control quantity P to the actuator 3. Meanwhile, a measured velocity Vp, obtained by differentiating the measured position, is input into the quantum-driven control unit 2 as occurrence frequency distribution data relative to the control quantity P and used in the calculation of a probability table described later. Note that the measured velocity Vp may also be directly measured using a sensor or the like constituting the measurement unit 4.

Fig. 1D illustrates an example of a configuration for performing velocity feedback control. The quantum-driven control unit 2 performs quantum gate operations using the target velocity V indicated by the command unit 1 and a velocity deviation 102 between the measured velocity Vp measured by the measurement unit 4 and the target velocity V, and outputs a control quantity P to the actuator 3. Similarly, the measured velocity Vp is input into the quantum-driven control unit 2 as occurrence frequency distribution data relative to the control quantity P and used in the calculation of the probability table.

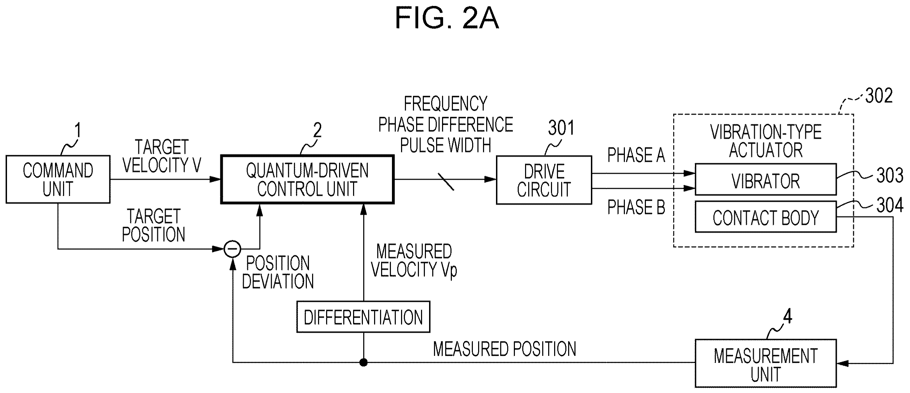

Fig. 2A to 2C are diagrams illustrating position feedback control of a vibration-type actuator, which is a feature of the present embodiment.

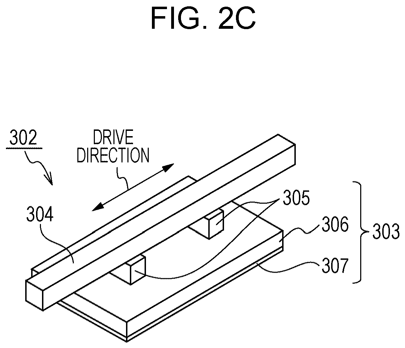

In Fig. 2A, the quantum-driven control unit 2 performs quantum gate operations based on the target velocity V indicated by the command unit 1 and the position deviation between the measured position measured by the measurement unit 4 and the target position as input, and outputs the phase difference, frequency, and pulse width, which are the control quantities, to a drive circuit 301. Based on the phase difference, frequency, and pulse width, the drive circuit 301 generates two-phase AC signals. The drive circuit 301 includes a voltage step-up circuit (not illustrated) composed of a coil and a transformer. The AC signal boosted to a desired drive voltage is applied to a piezoelectric element 307 included in a vibrator 303 illustrated in Fig. 2C. As the vibrator 303 is driven, a contact member 304 operates, and the position and speed of the contact member 304 are measured by the measurement unit 4, such as an encoder.

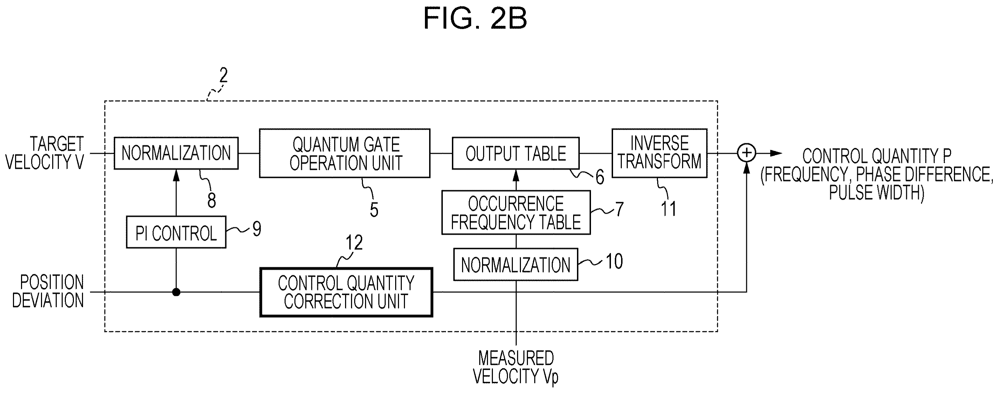

Fig. 2B illustrates the configuration of the quantum-driven control unit 2. The sum of the target velocity V and the position deviation is subjected to normalization 8 to a specific scale, and converted into a normalized value used for quantum gate operations. Here, the position deviation is a value computed by a PI controller 9 using a specific control gain. The normalization 8 performs scaling by dividing by the target velocity range and multiplying by the maximum value of the target state value.

For example, if the target velocity range is 0 to 50 mm/s and the maximum target state value is 64, then the normalized value is V*64/50. The target state value is a value used by a quantum gate operation unit described later. Next, a quantum gate operation unit 5 calculates the probability corresponding to the target state value and inputs probability data into an output table 6. The output table 6 performs calculations using the probability data of the target state value and occurrence frequency data of an occurrence frequency table 7, and outputs a control value based on the probability data. The occurrence frequency data of the occurrence frequency table 7 is obtained by similarly subjecting the measured velocity Vp to normalization 10 to derive a measured state value, and represents the occurrence frequency distribution of the measured state values relative to the control value. Finally, the control value is scaled to the range of the control quantity P by inverse transform 11 and output. The inverse transform 11 performs scaling by dividing by the maximum value of the control value and multiplying by the control quantity range. For the phase difference, for example, if the control quantity range is 0 to 90 degrees and the maximum control value is 64, the resulting value is control value*90/64.

A control quantity correction unit 12, which is a feature of the present invention, has the function of correcting a control quantity output based on the quantum gate operation unit 5 so as to approach the ideal value. Here, the ideal value refers to a state where the position deviation is zero when the actuator is driven. The control quantity correction unit 12 takes the position deviation as input, performs an integration operation on the sign (positive or negative) of the position deviation, and sequentially outputs the correction amount. This correction amount is added to the control quantity after the inverse transform 11, and the result is output as a control quantity P. The principle by which this functions to approach the ideal value will be described as below. When the actuator is affected by load fluctuations or the like, the position deviation increases or decreases according to the fluctuations. The direction of this increase or decrease is calculated from the integral of the aforementioned sign, and by correcting the control quantity accordingly, the position deviation can be controlled to approach zero at all times. Conventional position feedback control also manipulates the control quantity based on this principle. In contrast, the present invention performs main control using the quantum gate operation unit, which itself has the function of reducing position deviation. Additionally, the control quantity correction unit 12 is responsible for further suppressing the fluctuation factors. This enables the implementation of better controllability as compared to conventional position feedback control.

A vibration-type actuator 302 illustrated in Fig. 2C includes the vibrator 303 composed of an elastic body 306 and the piezoelectric element 307, which is an electro-mechanical energy conversion element, and the contact member 304 which operates in response to the vibrator 303 being driven. When an AC signal is applied to the piezoelectric element 307, two vibration modes in a thrust direction and a feed direction are generated in the vibrator 303, allowing the contact member 304 in pressured contact to operate. The elliptical motion generated at protrusions 305 is a combination of the two vibration modes, and the speed and direction of the vibration-type actuator 302 can be controlled by using the phase difference, frequency, and voltage amplitude (pulse width) of the two-phase AC signal as control quantities.

Note that all of the control quantities, i.e., phase difference, frequency, and pulse width, may be manipulated, or any one or two of them may be manipulated while keeping the remaining one(s) fixed at a fixed value(s). In the present embodiment, control is performed by manipulating the phase difference and frequency using the quantum gate operation unit, while keeping the pulse width fixed at a specific value.

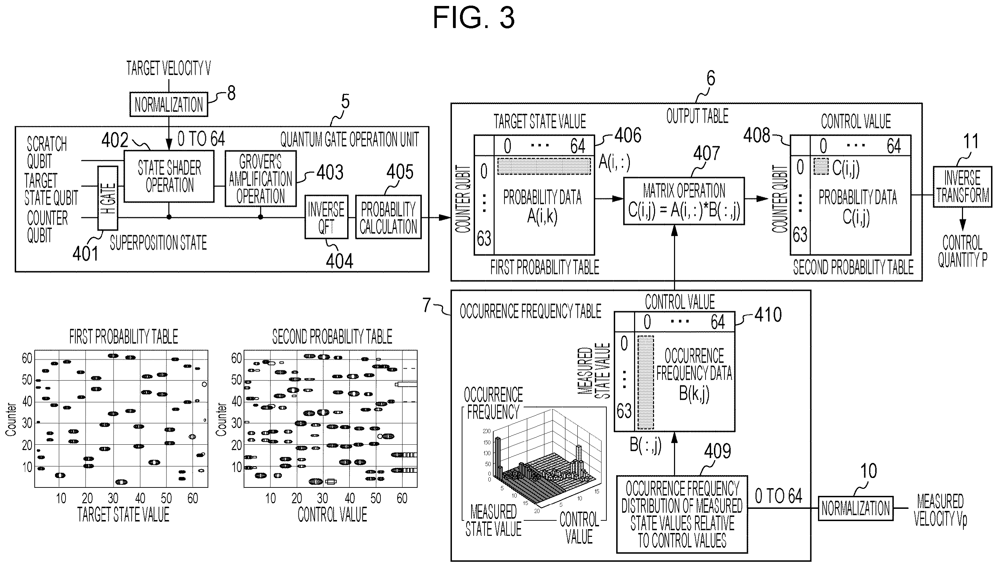

Fig. 3 is a diagram illustrating the details of the quantum gate operation unit and the table calculation.

As illustrated in Figs. 2A to 2C, main operations of the quantum-driven control unit are performed by the quantum gate operation unit 5, the output table 6, and the occurrence frequency table 7.

First, the quantum gate operation unit 5 is described. Quantum gate operations performed by the quantum gate operation unit 5 use a target state qubit and a counter qubit, which are placed in a superposition state by Hadamard gate 401. A superposition state refers to a state in which a qubit is read out as 0 or 1 with a 50% probability. The quantum gate operation unit 5 aims to perform quantum gate operations based on a target state value subjected to the normalization 8, and compute the probability of the target state value for the counter qubit. Specifically, it performs the following: a state shader operation 402, a Grover's amplification operation 403, an inverse QFT operation 404 on the counter qubit, and a probability calculation 405.

The state shader operation 402 takes the target state value as input, performs an operation using a scratch qubit, and outputs a state shader value. A scratch qubit is a computational qubit provided for performing operations on the target state qubit using a specific operation formula.

The Grover's amplification operation 403 performs a phase inversion of the target state qubit according to the probability of the state shader value, and iterates the phase inversion and amplitude amplification according to the counter qubit. The Grover's amplification operation consists of a flip operation and a mirror operation. It performs amplitude amplification by inverting the phase of a qubit in a superposition state and converting a phase difference into a difference in amplitude magnitude.

The inverse QFT operation 404 performs an inverse QFT operation on the counter qubit. The inverse QFT operation is the inverse transformation corresponding to the Quantum Fourier Transform (QFT) that represents, in the frequency domain, a qubit in a periodically changing superposition state. It takes qubits that represent the frequency domain as input, converts them into a corresponding signal, and outputs the signal. The probability calculation 405 computes the probability of the target state value for the counter qubit.

Next, the output table 6 will be described. The output table 6 aims to output the control value with the highest probability in accordance with the target state value. The output table 6 includes a first probability table 406, which holds the probability of the target state value for the counter qubit. This first probability table 406 is a table with probability data A(j, k) obtained by the quantum gate operation unit 5. Row i corresponds to the value of the counter qubit, with i ranging from 0 to 63 in 6-bit representation. Column k corresponds to the target state value, with k ranging from 0 to 64, representing a 6-bit value plus one. The reason why there are 65 target state values will be explained later in the state shader operation.

A contour map representing the probabilities in the first probability table 406 is illustrated in the left figure. A contour map represents the magnitude of probabilities using contour lines, where the darker regions indicate areas of higher probability. Based on the contour map, it is clear that the probability of each target state value varies with a distribution according to the counter qubit. By performing a matrix operation 407 on the probability data A(j, k) and occurrence frequency data B(k, j), the resulting probability data C(i, j) forms a second probability table 408. The second probability table 408 represents the probability of the control value for the counter qubit. As illustrated in the figure, C(i, j) is computed as the inner product of row i data of A (column k ranging from 0 to 64) and column j data of B (row k ranging from 0 to 64).

As a result, the probability of the control value for the target state value can be calculated through the counter qubit, and the control quantity P with high probability can be output. A contour map that graphically represents the probabilities in the second probability table 408 is illustrated in the left figure. Based on the contour map, it is clear that the probability of each control value varies with a distribution according to the counter qubit, and that the control value with high probability can be selected and output.

Finally, the occurrence frequency table 7 will be described. Using measured state values (ranging from 0 to 64) obtained by subjecting the measured state to normalization 10 using the same scaling as the target state value, as well as control values (ranging from 0 to 64) obtained by similarly normalizing the control quantity, an occurrence frequency distribution 409 of the measured state values relative to the control values is calculated. The occurrence frequency distribution can be derived from measurement data obtained by driving the actuator as illustrated in the figure. Alternatively, it is acceptable to use calculation data obtained using an actuator identification model. The occurrence frequency data B(k, j) represents the frequency of measured speeds when a specific control quantity is applied to the actuator. Fluctuations caused by noise or external factors result in fluctuations in speed, which are expressed as occurrence frequency data through normalization. This is used as an occurrence frequency table 410, which is then applied to the aforementioned probability operation to output control quantities with high reliability, which are robust against noise or fluctuation factors.

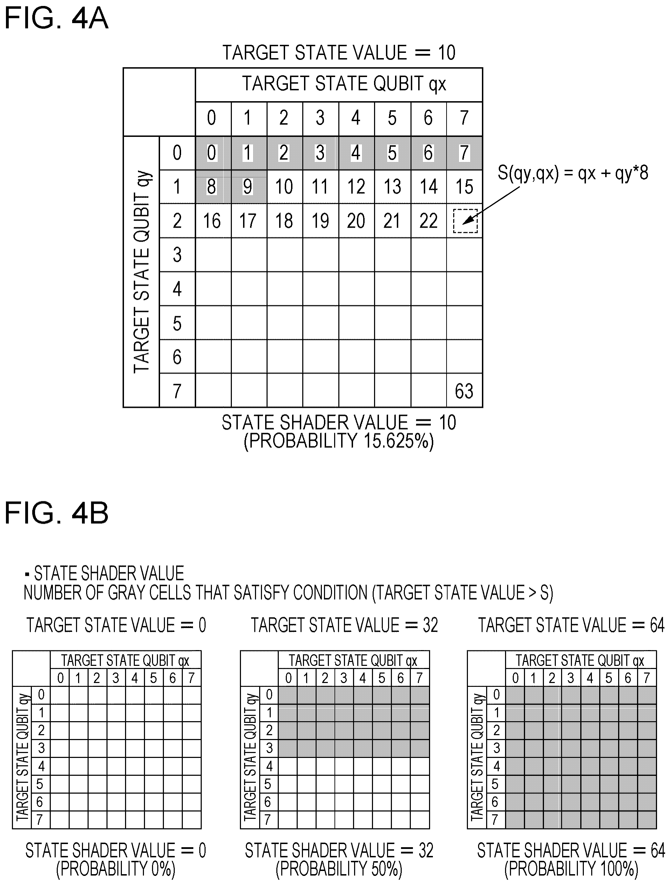

Figs. 4A to 4C is a diagram illustrating the algorithm of a state shader operation.

The state shader operation 402 performs calculations using a scratch qubit so that the state shader value changes according to the target state value. The output state shader value is a quantum state, and based on the state shader value, a flip operation (NOT operation and phase inversion) is performed on the target state qubit.

Fig. 4A is a diagram illustrating a method of calculating the state shader value. When a target state value is input, a specific operation is performed on qx and qy, which are the target state qubits. Both qx and qy are 3-bit qubits. Each value of the 64 cells illustrated in the figure represents the result of the operation on qx and qy, i.e., the operation formula S(qx, qy) = qx + qy*8. Since performing operations directly on qx and qy, which are qubits, would vary their states and prevent the readout, a scratch qubit is used for calculation. Cells that satisfy the condition that the target state value is greater than S are shaded gray, and the number of these gray cells constitutes the state shader value. For example, if the target state value is 10, cells from 0 to 9 are shaded gray, and the state shader value is 10. While this means simply "10" in conventional binary operations, in quantum gate operations, it is represented as a probability (10/64 = 15.625%). In other words, since qx and qy in a superposition state can probabilistically take all possible values, if target state value 10 is input, there is a 15.625% chance that a phase inversion will be performed on the target state qubit. Note that the phase inversion of the target state qubit is repeated according to the value of the counter qubit, and the probability based on the counter qubit is computed.

Fig. 4B illustrates how the state shader value (the number of gray cells) changes when target state values 0, 32, and 64 are input. Target state value 0 corresponds to 0% probability, target state value 32 corresponds to 50% probability, and target state value 64 corresponds to 100% probability of performing phase inversion on the target state qubit.

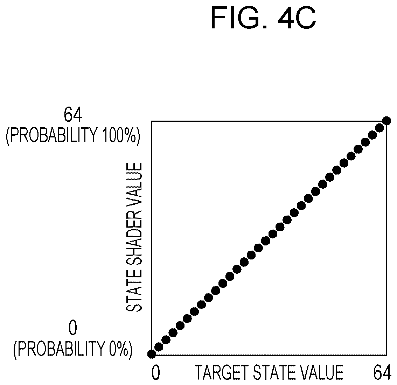

Fig. 4C illustrates the relationship between the target state value and the state shader value. In the present embodiment, the operation formula S is set so that the probability changes linearly with the target state value. However, the probability can be set to change nonlinearly using a formula such as a simple addition (qx + qy) or the sum of squares (qx² + qy²).

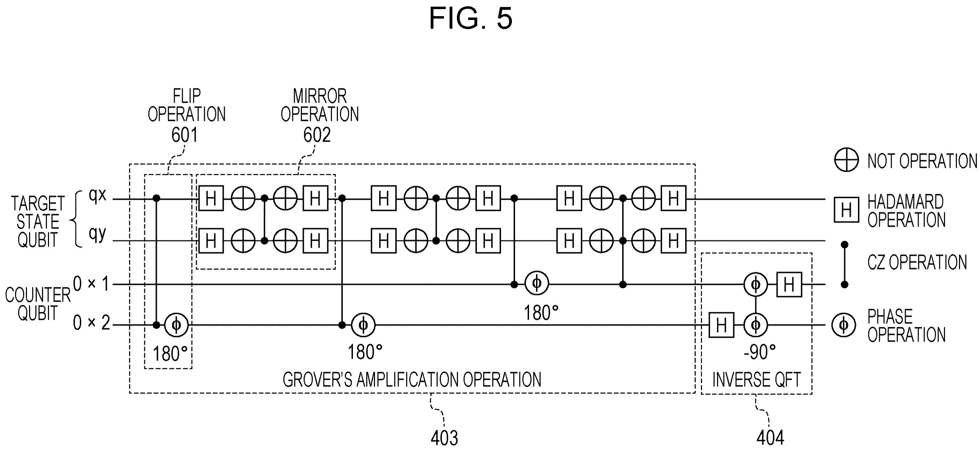

Fig. 5 is a diagram illustrating the quantum gate operation circuit for Grover's amplification operation and the inverse QFT.

As described earlier, a flip operation 601 is performed on the target state qubit based on the state shader value, and the flip operation 601 and a mirror operation 602 are iterated according to the counter qubit. The Grover's amplification operation 403 consists of the flip operation 601 and the mirror operation 602. It performs amplitude amplification by inverting the phase of a qubit in a superposition state and converting a phase difference into a difference in amplitude magnitude. Through the Grover's amplification operation 403, the accuracy of the qubit's readout probability can be enhanced.

QFT (Quantum Fourier Transform) represents a qubit, in the frequency domain, in a periodically changing superposition state. The inverse QFT 404 is the inverse transformation corresponding to QFT, and it takes qubits that represent the frequency domain as input, converts them into a corresponding signal, and outputs the signal.

In the present embodiment, operations are performed using the target state qubits qx and qy, each consisting of 3 bits, and the counter qubit consisting of 6 bits; however, for the sake of simplicity of the description, the number of bits is simplified in this figure.

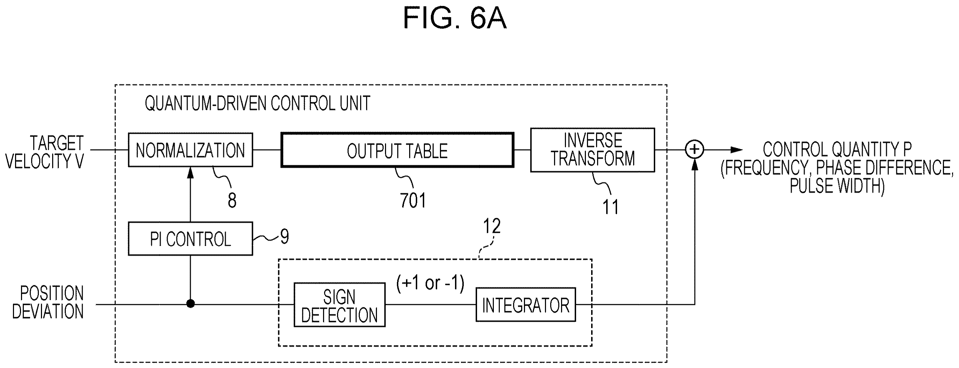

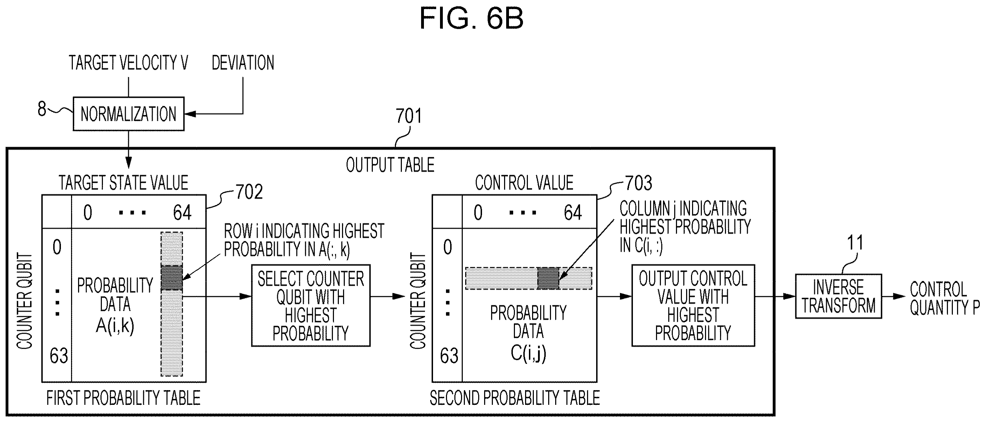

Figs. 6A and 6B are block diagrams of the correction of control quantities of the output table in an embodiment of the present invention.

In the present embodiment, the control quantity correction unit 12 corrects and outputs the control quantities using the first and second probability tables illustrated in Fig. 3. Therefore, the second probability table is the result of calculations performed in advance using the occurrence frequency table.

Fig. 6A illustrates the quantum-driven control unit of the present embodiment. The sum of the target velocity V and the position deviation is subjected to normalization 8 to a specific scale, converted into a target state value, and then input into an output table 701. Since the scaling used in the normalization 8 is the same as that used in the inverse transform 11, a description thereof is omitted. The output table 701 selects and outputs the control value with the highest probability according to the target state value. This control value is then scaled using the inverse transform 11 within the control quantity range and output as a control quantity P.

The position deviation is input into the control quantity correction unit 12, where the sign of the position deviation is detected. The detected sign value (+1 or -1) is input into an integrator and computed as an integrated quantity. At this time, the integrated quantity may be multiplied with a specific coefficient to adjust the weighting of the correction amount. This correction amount is added to the control quantity after the inverse transform 11, and the result is output as a control quantity P. The control quantity P consists of frequency, phase difference, and pulse width, and these are output to the actuator as drive parameters.

Fig. 6B illustrates the operation of the output table 701. First, in the first probability table, the counter qubit in row i, indicating the highest probability in column A (:, k) of the input target state value, is selected (black cell in the figure).

Next, in the second probability table, the control value in column j, indicating the highest probability in row C (i, :) of the selected counter qubit, is selected and output (black cell in the figure). Through this operation, the control value with the highest probability is output according to the target state value.

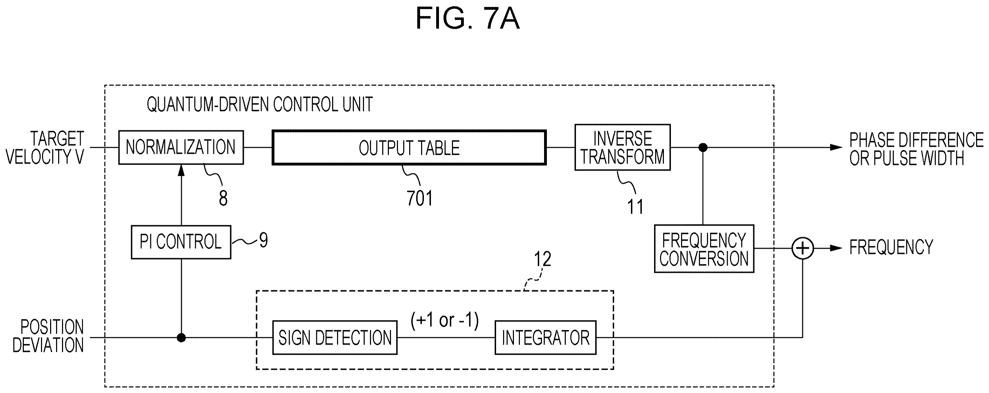

Figs. 7A to 7C are a block diagram in which frequency is corrected, and conceptual illustrations of the correction operation in the embodiment of the present invention. This example more specifically illustrates the control quantity correction means illustrated in Figs. 6A and 6B.

Fig. 7A illustrates the quantum-driven control unit of the present embodiment. The sum of the target velocity V and the position deviation is subjected to normalization 8 to a specific scale, converted into a target state value, and then input into the output table 701. Since the scaling used in the normalization 8 is the same as that used in the inverse transform 11, a description thereof is omitted. The output table 701 selects and outputs the control value with the highest probability according to the target state value. The control value is scaled using the inverse transform 11 within the control quantity range, and the phase difference is output as a control quantity. Alternatively, the pulse width may be output.

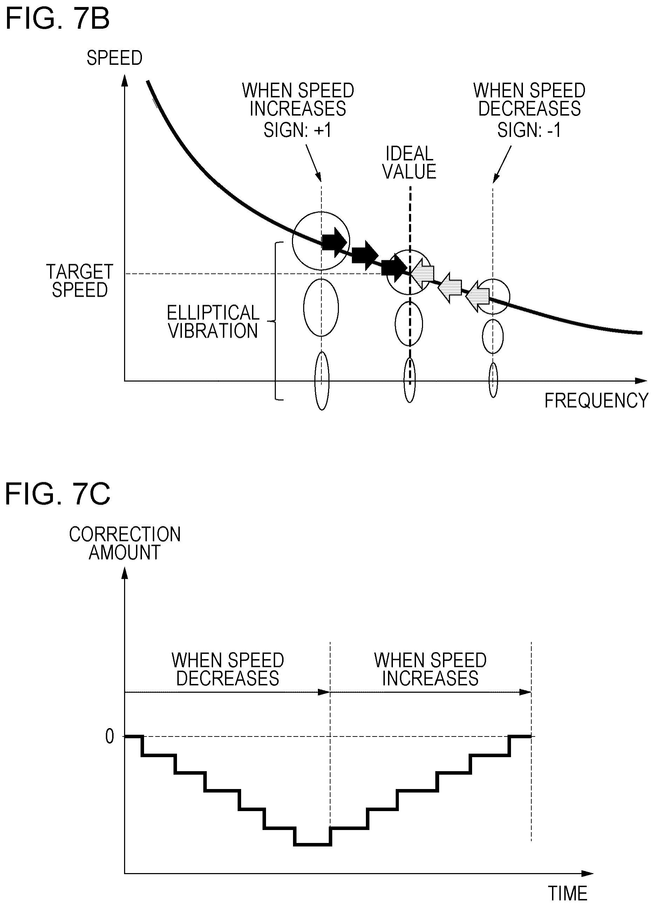

This example corresponds to a configuration that controls the speed dynamic range widely by using two parameters, phase difference and frequency. Fig. 7B is a schematic diagram of the frequency-speed characteristics of the vibration-type actuator, where the solid curve in the figure indicates the seed changes when frequency is manipulated. In the low-speed region, control is performed by manipulating the phase difference to change the shape of the elliptical vibration. Additionally, in the high-speed region, control is performed by manipulating the frequency to change the magnitude of the elliptical vibration.

For example, if the load fluctuates and increases, the speed decreases relative to the target speed, and the sign of the position deviation is detected as -1. As long as the speed reduction continues, the correction operates to decrease the frequency of the quantum gate operation unit. Conversely, if the load fluctuates and decreases, the speed increases relative to the target speed, and the sign of the position deviation is detected as +1. As long as the speed increase continues, the correction operates to increase the frequency of the quantum gate operation unit. With this correction function, even when the speed fluctuates due to load fluctuations, the sign, positive or negative, can be set in the opposite way if desired since it is a design matter.

Fig. 7C schematically illustrates the time transition of the correction amount during driving. When the speed decreases, the correction amount is integrated in the negative direction as long as the sign remains unchanged. Conversely, when the speed increases, the correction amount is integrated in the positive direction as long as the sign remains unchanged. In this way, the control quantity correction unit 12 operates to sequentially correct the frequency based on the sign of the position deviation, functioning to bring the control quantity of the quantum gate operation unit closer to the ideal value.

So far, the actuator equipped with quantum-driven control according to the present invention has been described.

Now, the results of applying the quantum-driven control of the present invention to an actual device will be described.

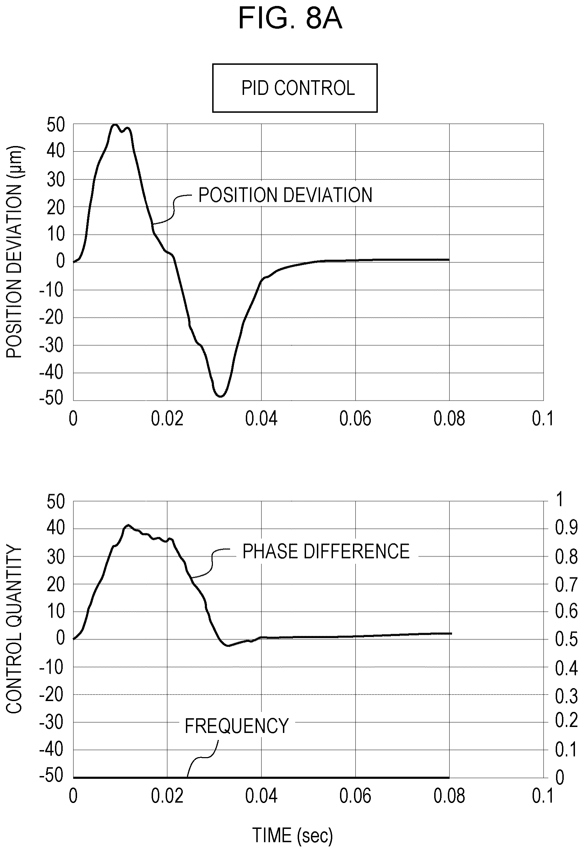

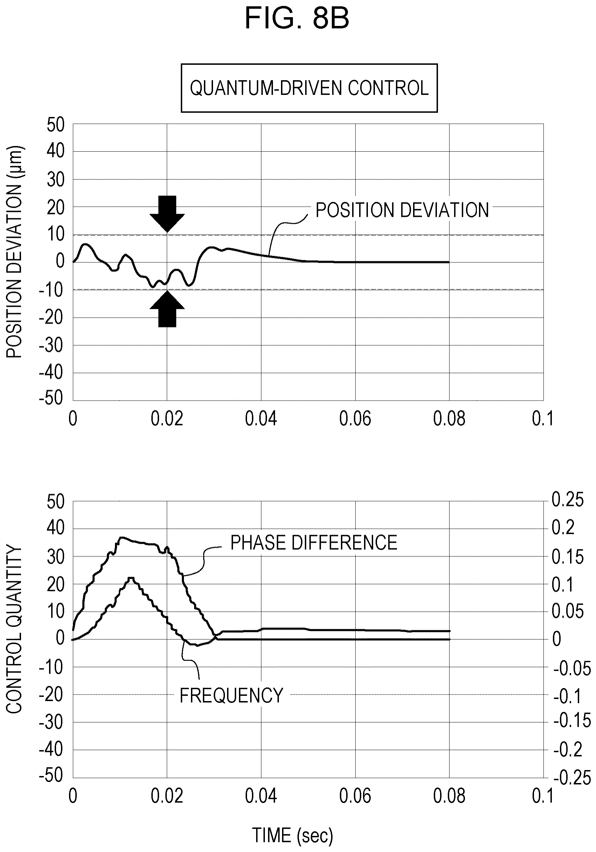

Figs. 8A and 8B illustrate the results of driving a vibration-type actuator using the quantum-driven control of the present invention.

Fig. 8A illustrates the result of driving using PID control as a comparative example. To clarify the effects of the present invention, measurements were taken under conditions where the load fluctuation increases by changing the posture of the vibration-type actuator. The PID gains were set as P = 0.32, I = 0.01, and D = 0.52, and these were each multiplied with A gain (overall gain) = 0.1.

The upper section indicates the time transition of the position deviation (the difference between the target position and the measured position), while the lower section indicates the time transition of the control quantities (phase difference and frequency). The command unit executed the operation with a maximum target speed of 50 mm/s, an acceleration time and deceleration time of 10 ms each, and a stop time of 40 ms. Fig. 8B illustrates the result of driving using the quantum-driven control of the present invention. In this control, only the proportional gain was set, with P = 0.08. Note that it is also acceptable to set the integral gain and the derivative gain. Looking at the control quantities, it is clear that the frequency changes with a waveform different from the phase difference. This is because the position deviation changes due to load fluctuations, and the frequency is accordingly corrected to bring the speed closer to the target speed. The position deviation was significantly reduced from ±50 µm to ±10 µm, achieving improved controllability.

### (Second Embodiment)

The actuator equipped with the quantum-driven control unit of the present invention can be used in applications such as a lens drive mechanism of a camera, which is an imaging device, an image stabilization device, and a stage control device, all of which involve lenses as optical elements. An optical device can be configured with an optical element and an actuator that operates the optical element.

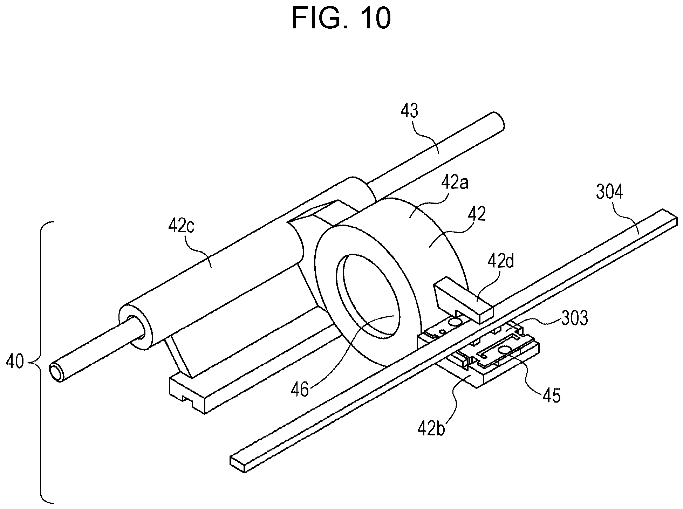

Fig. 10 illustrates an example of use in a lens drive mechanism that performs autofocus driving of a camera.

A drive mechanism 40 of a lens holder includes the vibrator 303, the contact member 304, a lens holder 42, a lens 46, and a guide bar 43 arranged in parallel with and support the lens holder 42 in a slidable manner. The contact member 304 has both ends fixed to a base (not illustrated), and the vibrator 303 and the lens holder 42 are integrated and move relative to the guide bar 43. When an AC voltage signal is applied to the vibrator 303 from a flexible printed circuit board (not illustrated), a driving force is generated between the vibrator 303 and the contact member 304, and this driving force causes the lens holder 42 to operate.

The lens holder 42 includes a cylindrical holder section 42a, a support section 42b that holds and secures the vibrator 303 and a pressing magnet 45, and a guide section 42c that engages with the guide bar 43 to provide guiding operations. The pressing magnet 45, which constitutes a pressing means, includes a permanent magnet and two yokes placed at both ends of the permanent magnet. A magnetic circuit is formed between the pressing magnet 45 and the contact member 304, generating an attractive force between the members. The pressing magnet 45 and the contact member 304 are located with a gap between them, and the contact member 304 is arranged to be in contact with the vibrator 303. The magnetic attractive force exerts a pressing force between the contact member 304 and the vibrator 303, generating a driving force and also serving as a guide for the lens holder 42. To counter external forces, the lens holder 42 is equipped with a drop-prevention section 42d, which contacts the contact member 304 to maintain a desired position.

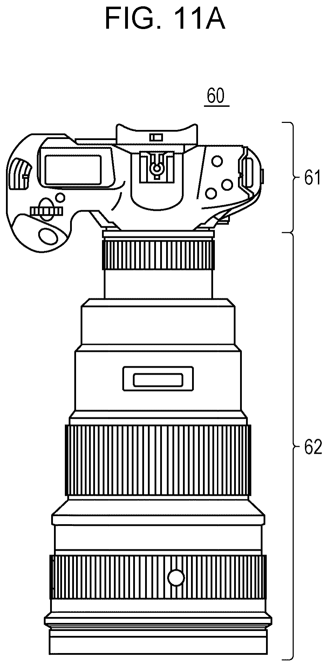

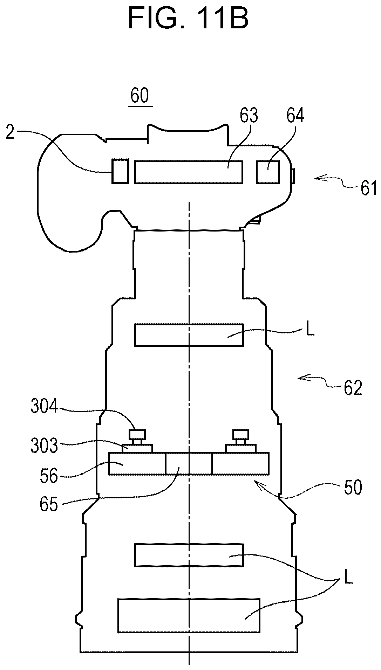

Figs. 11A and 11B illustrate examples of use in driving a lens and an imaging element during image stabilization.

Fig. 11A is a plan view (top view) illustrating the external appearance of an imaging device 60. Additionally, Fig. 11B is a schematic diagram of the internal structure of the imaging device 60.

The imaging device 60 is broadly composed of a main body 61 and a lens barrel 62 which is attachable to and detachable from the main body 61. The main body 61 includes an imaging element 63 such as a CCD sensor or CMOS sensor that converts an optical image formed by the light passing through the lens barrel 62 into an image signal, and a camera control microprocessor 64 that controls the overall operation of the imaging device 60. The lens barrel 62 includes multiple lenses L, such as a focus lens and a zoom lens, arranged at specific positions. The lens barrel 62 also incorporates an image stabilization device 50. The image stabilization device 50 includes a disc member 56 and the vibrator 303 provided on the disc member 56. An image stabilization lens 65 is arranged in a hole formed at the center of the disc member 56. The image stabilization device 50 is arranged so that the image stabilization lens 65 can move within a plane perpendicular to the optical axis of the lens barrel 62. By driving the vibrator 303 using the quantum-driven control unit 2, the vibrator 303 and the disc member 56 move relative to the contact member 304 fixed to the barrel, thereby driving the correction lens.

The present invention can also be used to drive the lens holder for moving a zoom lens. Accordingly, in addition to being used in the imaging device, it can also be incorporated into interchangeable lenses for lens driving purposes.

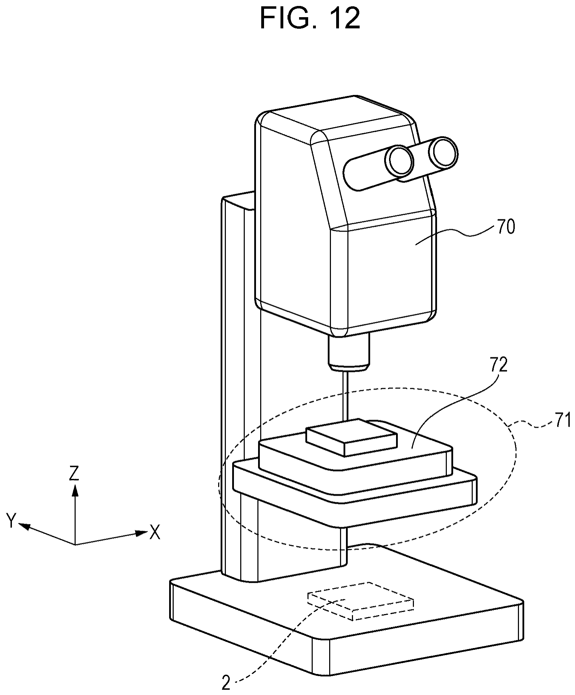

Fig. 12 illustrates an example of use in driving an automatic stage of a microscope.

The microscope in Fig. 12 includes an imaging unit 70 that incorporates an imaging element and an optical system, and an automatic stage 71 having a stage 72 that is placed on a base and moved by a vibration-type actuator. An object for observation is placed on the stage 72, and a magnified image thereof is captured using the imaging unit 70. When the observation area is wide, the vibration-type actuator is driven using the quantum-driven control unit 2 to move the stage 72. This enables the object for observation to move in the X and Y directions in the figure, allowing for the acquisition of many captured images. A computer (not illustrated) then merges the captured images together to create a single wide-area, high-resolution image. In this way, a stage can be configured with a mounting section and an actuator according to claim 1 or 2, which operate the mounting section.

Additionally, an electronic device may also be configured with a third member and the aforementioned actuator provided on the third member.

Furthermore, as described above, a control method for an actuator of the invention of the present application is a control method for an actuator including a first member, a second member that operates in response to the first member being driven, a measurement unit that measures a state of the second member, and a command unit that issues a command. The control method includes: an input step of taking, by a control unit, a signal based on a target state indicated by the command and the measured state as input; and a control quantity correction step of correcting a control quantity for driving the first member, computed by a quantum gate operation based on the signal. The method additionally includes an operation step of causing the second member to operate in response to the first member being driven based on the corrected control quantity.

In addition, a control device may include a program that executes each of the steps.

Furthermore, a non-transitory computer-readable recording medium storing the aforementioned program can also be configured. The present application is not limited to the content described above, and the configuration may be freely changed and used according to the user's purpose, within the scope that does not depart from the spirit of the present application.

The present invention is not limited to the above-described embodiment, and various changes and modifications can be made without departing from the spirit and scope of the present invention. Accordingly, the following claims are appended to make the scope of the present invention public.

This application claims priority based on Japanese Patent Application No. 2023-027316 filed February 24, 2023, which is hereby incorporated by reference herein in its entirety.

## Claims

1. An actuator comprising:
a first member;
a second member that operates in response to the first member being driven;
a measurement unit that measures a state of the second member;
a command unit that issues a command; and
a control unit,
wherein the control unit
includes a control quantity correction unit that takes a signal based on a target state indicated by the command and the measured state as input, and corrects a control quantity for driving the first member, computed by a quantum gate operation, and
the second member operates in response to the first member being driven based on the corrected control quantity.

2. The actuator according to claim 1, wherein the control unit corrects the control quantity based on an integral of a sign of a deviation between a target position of the second member in the target state and a position of the second member measured by the measurement unit.

3. The actuator according to claim 1 or 2, wherein the control unit outputs the control quantity based on the quantum gate operation using a qubit.

4. The actuator according to claim 3, wherein the control unit outputs a control quantity associated with a probability that the qubit is read out based on the target state.

5. The actuator according to claim 4, wherein the control unit includes an output table corresponding to the probability based on the quantum gate operation.

6. The actuator according to claim 1, wherein the control unit includes a qubit that represents the target state in a superposition state using a Hadamard gate and a counter qubit, performs a quantum gate operation using the qubit based on a normalized value corresponding to the target state, and calculates a probability of the target state with respect to the counter qubit.

7. The actuator according to claim 6, wherein the quantum gate operation performs a state shader operation by taking a value of the target state as input and performing an operation using a scratch qubit to output a state shader value, a Grover's amplification operation by performing a phase inversion of the target state qubit depending on a probability of the state shader value and iterating the phase inversion and amplitude amplification according to the counter qubit, and an inverse QFT operation on the counter qubit.

8. The actuator according to claim 7, wherein the Grover's amplification operation consists of a flip operation and a mirror operation, and the Grover's amplification operation performs amplitude amplification by inverting a phase of a qubit in a superposition state and converting a phase difference into a difference in amplitude magnitude.

9. The actuator according to claim 7, wherein the inverse QFT operation is an inverse transformation corresponding to a Quantum Fourier Transform (QFT) that represents, in a frequency domain, a qubit in a periodically changing superposition state, and the inverse QFT operation takes a qubit that represents the frequency domain as input, converts the qubit into a corresponding signal, and outputs the signal.

10. The actuator according to claim 6, wherein the control unit includes a first probability table with probability data of a value of the target state with respect to the counter qubit.

11. The actuator according to claim 6, wherein the control unit includes an occurrence frequency table with occurrence frequency distribution data of a measured state value with respect to a control value, the measured state value and the control value being obtained by normalizing the measured state and the control quantity.

12. The actuator according to claim 6, wherein the control unit includes a second probability table with probability data of the control value with respect to the counter qubit, computed using the first probability table and the occurrence frequency table.

13. The actuator according to claim 1 or 2, wherein:
the first member is a vibrator equipped with an elastic body and an electro-mechanical energy conversion element; and
the second member is a contact member in contact with the elastic body.

14. The actuator according to claim 13, wherein the control quantity is a parameter for adjusting at least one of a frequency, phase difference, and amplitude of a voltage applied to the electro-mechanical energy conversion element.

15. An optical device comprising: an optical element; and the actuator according to claim 13, the optical element operating in response to the contact member operating.

16. An imaging device comprising: an imaging element; an optical element; and the actuator according to claim 13, at least one of the optical element and the imaging element operating in response to the contact member operating.

17. A stage comprising: a mounting section; and the actuator according to claim 1 or 2, the actuator causing the mounting section to operate.

18. An electronic device comprising:
a third member; and
the actuator according to claim 1 or 2 provided on the third member.

19. A control method for an actuator including a first member, a second member that operates in response to the first member being driven, a measurement unit that measures a state of the second member, and a command unit that issues a command,
wherein a control unit executes:
an input step of taking a signal based on a target state indicated by the command and the measured state as input;
a control quantity correction step of correcting a control quantity for driving the first member, computed by a quantum gate operation based on the signal; and
an operation step of causing the second member to operate in response to the first member being driven based on the corrected control quantity.

20. A program for causing a control device to execute each of the steps according to claim 19.

21. A non-transitory computer-readable recording medium storing the program according to claim 20.
